# EUROPÄISCHE PATENTSCHRIFT

(11) **EP 2 946 983 B1**
(45) Veröffentlichungstag und Bekanntmachung des Hinweises auf die Patenterteilung: **07.11.2018**
(21) Anmeldenummer: 15168451.1
(22) Anmeldetag: 20.05.2015
(51) Int. Cl.: B62B 3/06

(54) **FLURFÖRDERZEUG MIT RAMPENHUBFUNKTION**
INDUSTRIAL TRUCK WITH RAMP LIFTING FUNCTION
CHARIOT DE MANUTENTION DOTÉ D'UNE FONCTION DE LEVAGE DE RAMPE

(30) Priorität: 20.05.2014 DE 102014107082
(43) Veröffentlichungstag der Anmeldung: 25.11.2015
(73) Patentinhaber: Jungheinrich Aktiengesellschaft, 22047 Hamburg (DE)
(72) Erfinder: Badura, Klaus-Peter, 21357 Barum (DE); Neubauer, Dirk, 21335 Lüneburg (DE)
(74) Vertreter: Hauck Patentanwaltspartnerschaft mbB

(56) Entgegenhaltungen:
- DE-U- 1 945 312
- DE-U1- 9 205 223
- GB-A- 2 190 896

## Beschreibung

Die Erfindung betrifft ein Flurförderzeug mit einem Antriebsteil und einem relativ zu dem Antriebsteil höhenverstellbaren Lastteil mit zwei Radarmen. Jeder der Radarme hat einen schwenkbar angelenkten Radarmhebel mit mindestens einer Lastrolle und eine Stange, über die eine Höhenverstellbewegung des Lastteils mit einer Schwenkbewegung des Radarmhebels gekoppelt ist. Die Stange weist einen Hydraulikzylinder auf, mit dem eine Länge der Stange verstellbar ist. Dadurch kann zur Verwirklichung einer Rampenhubfunktion das Lastteil gegenüber dem Antriebsteil angehoben werden, ohne gleichzeitig den Radarmhebel auszuschwenken. Die Radarmspitzen können also in ihrer abgesenkten Position verbleiben. Ein solcher Rampenhub ist insbesondere zum Befahren von Rampen nützlich, unter Umständen aber auch zum Aufnehmen von Lasten, die nicht parallel zum Boden angeordnet sind, etwa bei stärkeren Bodenunebenheiten unter einem Regallagerplatz.
Aus den beiden Druckschriften DE 19 45 312 U und DE 92 05 223 U1 sind Flurförderzeuge bekannt geworden, bei denen statt einer Druckstange, über die eine Verstellbewegung des Lastteils relativ zum Antriebsteil mechanisch mit einer Schwenkbewegung des Radarmhebels gekoppelt ist, die Radarmhebel von gesonderten, in den Radarmen angeordneten Hydraulikzylindern ausgeschwenkt werden Die DE 92 05 223 U1 offenbart zusätzlich eine Rampenhubfunktion.

Ein Flurförderzeug mit Rampenhubfunktion ist aus der Druckschrift DE 37 10 776 A1 bekannt geworden. Bei dem bekannten Fahrzeug ist an dem Radarmhebel eine Zugstange an gelenkt, an der zum Ausschwenken des Radarmhebels gezogen werden muss. Dies erfolgt mithilfe eines Umlenkhebels, dessen mittlerer Abschnitt am Lastteil drehbar gelagert ist. Ein Ende des Umlenkhebels ist am Antriebsteil angelenkt, sodass beim Anheben des Lastteils das andere Ende, das mit der Druckstange verbunden ist, ausgelenkt wird.

Davon ausgehend ist es die Aufgabe der Erfindung, ein Flurförderzeug mit Rampenhubfunktion zur Verfügung zu stellen, bei dem statt der Zugstange eine Druckstange verwendet wird, sowie einen Umrüstsatz, mit dem ein herkömmliches Flurförderzeug mit einer Druckstange so umgerüstet werden kann, dass es eine Rampenhubfunktion aufweist.

Diese Aufgabe wird gelöst durch das Flurförderzeug mit den Merkmalen des Anspruchs 1. Vorteilhafte Ausgestaltungen sind in den sich anschließenden Unteransprüchen angegeben.

Das Flurförderzeug hat ein Antriebsteil und ein relativ zu dem Antriebsteil höhenverstellbares Lastteil mit zwei Radarmen, wobei jeder der Radarme Folgendes aufweist:
- einen Radarmhebel, der mindestens eine Lastrolle aufweist und schwenkbar an dem Radarm angelenkt ist, und
- eine Stange, über die eine Höhenverstellbewegung des Lastteils mit einer Schwenkbewegung des Radarmhebels gekoppelt ist, wobei die Stange einen Hydraulikzylinder aufweist, mit dem eine Länge der Stange verstellbar ist und der ein Arbeitsvolumen aufweist, wobei
- die beiden Stangen Druckstangen sind und
- das Flurförderzeug einen Druckspeicher aufweist, der mit den Arbeitsvolumina der beiden Hydraulikzylinder verbindbar ist.

Das Flurförderzeug kann ein Niederhub- oder Hubhubfahrzeug sein. Es kann sich um ein deichselgeführtes Flurförderzeug handeln, insbesondere um einen Gabelhubwagen, oder um ein Mitfahrfahrzeug. Das Flurförderzeug kann einen elektrischen Fahrantrieb und/oder einen von einem elektrischen Pumpenaggregat angetriebenen Hubantrieb aufweisen. Durch Anheben des Antriebsteils relativ zu dem Lastteil und gleichzeitiges Ausschwenken des Radarmhebels mit der mindestens einen Lastrolle kann das Flurförderzeug einen sogenannten Initialhub ausführen, bei dem ein Lasttragmittel, das beispielsweise von den Radarmen selbst oder von oberhalb der Radarme angeordneten Gabelarmen gebildet sein kann, in einer horizontalen Anordnung angehoben wird. Das Antriebsteil kann mindestens ein lenkbares Rad aufweisen.

Eine zum Beispiel aus der Druckschrift DE 10 2009 033 709 A1 bekannte Konstruktion derartiger Flurförderzeuge verwendet zum Ausschwenken der Radarmhebel eine Druckstange. Um in der eingangs geschilderten Weise eine Rampenhubfunktion ausüben zu können, muss die Länge der Druckstange verstellbar sein. Für die Initialhubfunktion müssen die Druckstangen insbesondere bei beladenem Flurförderzeug zum Ausschwenken der Radarme große Kräfte übertragen. Soll die Längenverstellbarkeit der Druckstangen mithilfe von Hydraulikzylindern bewerkstelligt werden, wie in der eingangs zitierten Druckschrift DE 37 10 776 A1 in Verbindung mit einer Zugstange gezeigt, müsste das Hydrauliksystem des Flurförderzeugs bei jedem Initialhub einen erheblichen Druck zur Verfügung stellen.

Ein weiteres Problem bei der Verwendung von Druckstangen besteht darin, dass die Druckstangen während der Rampenhubstellung ihre kürzeste Länge aufweisen, sich die integrierten Hydraulikzylinder also in einer eingefahrenen Stellung befinden. Beim Absenken des Lastteils aus der Rampenhubstellung müssen die Arbeitsvolumina der Hubzylinder sehr schnell wieder gefüllt werden, obwohl das Hydrauliksystem beim Absenken in der Regel drucklos ist bzw. das Pumpenaggregat abgeschaltet.

Bei der Erfindung werden diese Schwierigkeiten dadurch überwunden, dass das Flurförderzeug einen Druckspeicher aufweist, der mit den Arbeitsvolumina der beiden Hydraulikzylinder verbindbar ist. Dabei ist vorgesehen, Druckspeicher und Arbeitsvolumina insbesondere dann zu verbinden, wenn von einer Initialhubfunktion zu einer Rampenhubfunktion gewechselt wird. Während des "normalen" Initialhubs weisen die Druckstangen ihre größte Länge auf und die integrierten Hydraulikzylinder sind in einer ausgefahrenen Stellung. Die Arbeitsvolumina der Hydraulikzylinder sind dementsprechend mit Hydraulikflüssigkeit gefüllt und die in ihnen befindliche Hydraulikflüssigkeit ist eingesperrt, um die erforderlichen Druckkräfte übertragen zu können.

Um die Rampenhubfunktion auszuführen, muss die Länge der Druckstangen veränderbar sein. Hierzu wird bei der Erfindung die Verbindung zwischen den Arbeitsvolumina der beiden Hydraulikzylinder und dem Druckspeicher hergestellt und die zuvor in den Hydraulikzylindern eingesperrte Hydraulikflüssigkeit kann beim Hubvorgang aus den Arbeitsvolumina der Hydraulikzylinder in den Druckspeicher strömen. Anschließend kann die Verbindung wahlweise abgesperrt werden. Beim Senkvorgang wird die Verbindung zwischen den Arbeitsvolumina und dem Druckspeicher nochmals hergestellt und die Hydraulikflüssigkeit strömt in die Arbeitsvolumina zurück, sodass die Hydraulikzylinder ausfahren können bis die Druckstangen wieder ihre größte Länge aufweisen.

Der Druckspeicher kann beispielsweise ein Membran-, Blasen- oder Kolbenspeicher sein. Er kann die in den beiden Arbeitsvolumina befindliche Hydraulikflüssigkeit aufnehmen und dabei den zum schnellen und zuverlässigen Zurückführen der Hydraulikflüssigkeit in die Arbeitsvolumina erforderlichen Druck aufrechterhalten.

Um die Verbindung zwischen den beiden Arbeitsvolumina und dem Druckspeicher herstellen zu können, kann insbesondere ein Steuerventil eingesetzt werden. In einer Durchgangsstellung des Steuerventils ist die Verbindung hergestellt. Zusätzlich kann das Steuerventil eine Sperrstellung aufweisen, in der die Verbindung zwischen den Arbeitsvolumina und dem Druckspeicher abgesperrt ist.

In einer Ausgestaltung weist das Flurförderzeug ein von dem Druckspeicher und den Hydraulikzylindern der Druckstangen hydraulisch vollständig getrenntes Hydrauliksystem mit einem Hubzylinder und einer Hydraulikpumpe auf. Der Hubzylinder dient zum Anheben des Lastteils relativ zu dem Antriebsteil. Die Hydraulikpumpe kann ein elektrisches Pumpenaggregat aufweisen. Bei der Erfindung ist das Hydrauliksystem des Flurförderzeugs hydraulisch vollständig von dem Druckspeicher und den Hydraulikzylindern der Druckstangen getrennt, das heißt es erfolgt kein Austausch von Hydraulikflüssigkeit. Der Druckspeicher und die Hydraulikzylinder der Druckstangen bilden ein unabhängiges hydraulisches System. Da es keine Pumpe aufweist, kann es auch als Passivhydrauliksystem bezeichnet werden. Die vollständige Trennung der beiden Hydrauliksysteme hat den Vorteil, dass beide unabhängig voneinander funktionsfähig sein können. Ein weiterer Vorteil ist, dass bestehende Flurförderzeuge relativ einfach mit einem erfindungsgemäßen Passivhydrauliksystem nachgerüstet werden können.

In einer Ausgestaltung ist jedem der beiden Arbeitsvolumina ein Steuerventil zugeordnet, mit dem das jeweilige Arbeitsvolumen wahlweise abgesperrt oder mit dem Druckspeicher verbunden werden kann. Die beiden Steuerventile können insbesondere Lasthalteventile sein, die in der gesperrten Stellung leckagefrei sind. Bei dieser Ausgestaltung können beide Arbeitsvolumina getrennt voneinander abgesperrt werden. Hierdurch wird auch bei ungleichmäßiger Beladung der beiden Radarme eine Seitenneigung des Lasttragmittels oder gar ein Kippen zuverlässig unterbunden.

In einer Ausgestaltung sind zwischen den beiden Steuerventilen einerseits und dem Druckspeicher andererseits ein Stromregelventil und ein parallel dazu geschaltetes Beipassventil geschaltet, so dass die Verbindung zwischen den beiden Arbeitsvolumina und dem Druckspeicher wahlweise über das Stromregelventil oder über das Beipassventil hergestellt werden kann. Grundsätzlich kann ein Umschalten zwischen Initialhub (also einer gleichzeitigen Höhenverstellung des Lastteils relativ zu dem Antriebsteil und Schwenkbewegung der Radarmhebel) und Rampenhub (also einer Höhenverstellung des Lastteils relativ zu dem Antriebsteil ohne gleichzeitige Schwenkbewegung der Radarmhebel oder einer Schwenkbewegung der Radarmhebel ohne gleichzeitige Höhenverstellung des Lastteils relativ zu dem Antriebsteil) durch Öffnen bzw. Sperren der Steuerventile erfolgen. Das Öffnen der Steuerventile kann jedoch in bestimmten Anwendungssituationen - zum Beispiel bei einer angehobenen Stellung des Lastteils bei einer aufgenommenen Last - zu einem schlagartigen Absenken der Radarmspitzen führen. Es kann daher von Vorteil sein, ein Stromregelventil zwischenzuschalten, was zu einer gleichmäßigen, langsamen Absenkbewegung der Radarmspitzen führt. Dies ist in der genannten Ausgestaltung bei geschlossenem Beipassventil jederzeit möglich. In einer weiteren Ausgestaltung bleibt das Beipassventil immer dann geschlossen, wenn der Betriebszustand des Flurförderzeugs unbekannt ist, insbesondere unmittelbar nach der Inbetriebnahme des Fahrzeugs ausgehend von einem vollständig abgeschalteten Zustand. Ist der Betriebszustand bekannt, zum Beispiel nachdem eine vollständig abgesenkte Stellung des Lastteils erreicht wurde, kann das Beipassventil dauerhaft geöffnet und es kann durch eine elektronische Steuerung dafür Sorge getragen werden, dass die Steuerventile in kritischen Anwendungssituationen nicht geöffnet werden.

In einer Ausgestaltung weist das Flurförderzeug einen Sensor auf, der dazu ausgebildet ist, das Erreichen einer mittleren Hubhöhe anzuzeigen, und eine elektronische Steuerung, die dazu ausgebildet ist, beim Absenken des Lastteils relativ zu dem Antriebsteil bei geschlossenem Beipassventil die beiden Steuerventile bei Unterschreiten der mittleren Hubhöhe zu öffnen, beispielsweise in einem Bereich von 10 % bis 80 % der maximalen Hubhöhe liegen, insbesondere in einem Bereich von 20 % bis 40 % der maximalen Hubhöhe. Wird das Lastteil ausgehend von einer angehobenen, nicht waagerechten Stellung abgesenkt, ist bei Erreichen einer vollständig eingeschwenkten Stellung der Radarmhebel ein weiteres Absenken nur möglich, wenn die Hydraulikzylinder der Druckstangen weiter ausgefahren werden. Hierzu kann das Druckmittel kontrolliert über das Stromregelventil aus dem Druckspeicher in die Arbeitsvolumina einströmen.

In einer Ausgestaltung ist an einer Deichsel des Flurförderzeugs ein Betätigungselement angeordnet, dessen Betätigung den Druckspeicher mit den Arbeitsvolumina verbindet. Das Betätigungselement kann insbesondere ein Taster oder Schalter zur elektrischen Ansteuerung eines Magnetventils sein. Beispielsweise kann an der Deichsel bzw. am Deichselkopf eine erste Tasterwippe (z.B. rechts) für den Initialhub und eine zweite Tasterwippe (z.B. links) für den Rampenhub angeordnet sein. Auf diese Weise kann die Rampenhubfunktion sehr einfach von der Deichsel des Flurförderzeugs aus betätigt werden.

In einer Ausgestaltung ist an einem der Radarme ein Sensor vorhanden, der eine vollständig eingeschwenkte Stellung des zugehörigen Radarmhebels erfasst. Der Sensor kann beispielsweise einen Berührungsschalter, einen Reedkontakt oder einen Näherungsschalter aufweisen. Er ist so angeordnet, dass die vollständig eingeschwenkte Stellung des Radarmhebels, also eine ganz abgesenkte Radarmspitze, festgestellt werden kann. In Verbindung mit weiteren Sensoren, die die vollständig angehobene und die vollständig abgesenkte Stellung des Lastteils relativ zu dem Antriebsteil erfassen, kann jederzeit festgestellt werden, in welchem Zustand (Initialhub abgesenkt, Initialhub angehoben, Rampenhub) sich das Flurförderzeug befindet.

In einer Ausgestaltung weist das Flurförderzeug einen Hubzylinder, einen Senkendsensor, der eine vollständig abgesenkte Stellung des Hubzylinders erfasst, einen Hubendsensor, der eine vollständig angehobene Stellung des Hubzylinders erfasst, und eine elektronische Steuerung mit einem Betriebszustandsspeicher auf, der dazu ausgebildet ist, zu speichern, ob das Flurförderzeug zuletzt einen Rampenhub oder einen Initialhub ausgeführt hat. Bei dieser Ausgestaltung können die unterschiedlichen Funktionen des Flurförderzeugs wie folgt ausgeführt werden: Zur Ausführung eines Rampenhubs muss grundsätzlich der Hubzylinder in eine weiter angehobene Stellung verfahren werden, in der Regel durch Öffnen eines Hebenventils und Ansteuern einer Hydraulikpumpe. Gleichzeitig wird der Druckspeicher mit den Arbeitsvolumina der beiden Hydraulikzylinder verbunden. Dies geschieht nach Betätigen eines Betätigungselements für den Rampenhub unmittelbar, wenn der Senkendsensor feststellt, dass der Hubzylinder in der vollständig abgesenkten Stellung ist, oder wenn in dem Betriebszustandsspeicher gespeichert ist, dass zuletzt ein Rampenhub ausgeführt wurde. Anderenfalls wird der Hubzylinder zunächst vollständig abgesenkt, bevor der Rampenhub ausgeführt wird. Soll hingegen eine Initialhub ausgeführt werden, wird ebenfalls ein Hebenventil geöffnet und eine Hydraulikpumpe angesteuert. Gleichzeitig wird die Verbindung zwischen Druckspeicher und den Arbeitsvolumina der Hydraulikzylinder abgesperrt. Dies geschieht nach Betätigen eines entsprechenden Bedienelements dann unmittelbar, wenn der Senkendsensor feststellt, dass der Hubzylinder in der vollständig abgesenkten Stellung ist, oder wenn in dem Betriebszustandsspeicher gespeichert ist, dass zuletzt ein Initialhub ausgeführt wurde. Anderenfalls wird zunächst der Hubzylinder vollständig abgesenkt, bei geöffneter Verbindung zwischen Druckspeicher und den Arbeitsvolumina der Hydraulikzylinder. Bei einer Senkanforderung durch Betätigen eines entsprechenden Betätigungselements wird stets der Hubzylinder durch Ansteuern eines Senkventils abgesenkt. Zeigt der Betriebszustandsspeicher an, dass zuletzt ein Initialhub ausgeführt wurde, bleibt die Verbindung zwischen dem Druckspeicher und den Arbeitsvolumina abgesperrt, bis der Senkendsensor erfasst, dass der Hubzylinder vollständig abgesenkt wurde.

Anschließend kann zusätzlich die Verbindung zwischen dem Druckspeicher und den Arbeitsvolumina der Hydraulikzylinder geöffnet werden. Zeigt der Betriebszustandsspeicher an, dass zuletzt ein Rampenhub ausgeführt wurde, wird die Verbindung zwischen dem Druckspeicher und den Arbeitsvolumina sogleich geöffnet.

In einer Ausgestaltung weist das Flurförderzeug einen nichtflüchtigen Speicher auf, in dem eine Information über einen Betriebszustand des Flurförderzeugs nach dem Ausschalten des Flurförderzeugs erhalten bleibt. Der nichtflüchtige Speicher kann insbesondere ein FLASH-Speicher oder ein sonstiger Speicher sein, der seinen Zustand unabhängig von einer Energieversorgung beibehalten kann. Die Information kann zum Beispiel lauten, dass zuletzt ein Rampenhub ausgeführt wurde oder dass sich die Radarme in einer nicht-waagerechten Position befinden. Bei Inbetriebnahme des Flurförderzeugs kann durch Auswerten dieser Information insbesondere ein Aktivieren des Rampenhubs in einer kritischen Anwendungssituation vermieden werden.

In einer Ausgestaltung weisen die Hydraulikzylinder einen zulässigen Betriebsdruck von 200 bar oder mehr auf. Insbesondere kann der zulässige Betriebsdruck auch 300 bar oder mehr oder 400 bar oder mehr betragen. Durch die Verwendung von Hydraulikzylindern mit hoher Druckfestigkeit kann das Flurförderzeug auch bei Verwendung von Hydraulikzylindern mit relativ geringem Durchmesser, die gut in die Radarme integriert werden können, zum Anheben schwerer Lasten eingesetzt werden. Es ist zu beachten, dass die Druckstangen wegen der Geometrie der Radarmhebel und der entsprechenden Hebelwirkungen regelmäßig wesentlich größere Kräfte übertragen müssen, als die Gewichtskraft der Last.

Die oben angegebene Aufgabe wird ebenfalls gelöst durch den Umrüstsatz für ein Flurförderzeug mit den Merkmalen des Anspruchs 11. Vorteilhafte Ausgestaltungen sind in den sich anschließenden Unteransprüchen angegeben.
Der Umrüstsatz ist für ein Flurförderzeug bestimmt, das ein Antriebsteil und ein relativ zu dem Antriebsteil höhenverstellbares Lastteil mit zwei Radarmen aufweist, wobei jeder der Radarme einen Radarmhebel, der mindestens eine Lastrolle aufweist und schwenkbar an dem Radarm angelenkt ist, und eine Druckstange aufweist, über die eine Höhenverstellbewegung des Lastteils mit einer Schwenkbewegung des Radarmhebels gekoppelt ist. Der Umrüstsatz weist folgendes auf:
- zwei Druckstangen, die jeweils einen Hydraulikzylinder aufweisen, mit dem eine Länge der Druckstange verstellbar ist und der ein Arbeitsvolumen aufweist,
- einen Druckspeicher und
- eine hydraulische Verbindungseinrichtung, mit der die Arbeitsvolumina der beiden Hydraulikzylinder mit dem Druckspeicher verbindbar sind.
Zu den Merkmalen des Umrüstsatzes und des umzurüstenden Flurförderzeugs wird auf die vorstehenden Erläuterungen verwiesen, die entsprechend gelten. Das umzurüstende Flurförderzeug kann eine herkömmliche, nicht längenverstellbare Druckstange aufweisen, sodass nur ein Initialhub möglich ist. Mithilfe des Umrüstsatzes können die herkömmlichen Druckstangen durch die beiden jeweils einen Hydraulikzylinder aufweisenden Druckstangen ersetzt werden. In Verbindung mit dem Druckspeicher und der hydraulischen Verbindungseinrichtung, die im Wesentlichen aus einer geeigneten Anordnung von Hydraulikleitungen und mindestens einem Steuerventil besteht, kann das herkömmliche Flurförderzeug in ein dem Flurförderzeug des Anspruchs 1 entsprechendes Flurförderzeug umgerüstet werden. Die skizzierte Umrüstung ist dabei sehr einfach möglich, weil in das Hydrauliksystem des bestehenden Flurförderzeugs nicht eingegriffen werden muss.

In einer Ausgestaltung weist die hydraulische Verbindungseinrichtung zwei Steuerventile auf, mit denen jeweils eines der Arbeitsvolumina wahlweise abgesperrt oder mit dem Druckspeicher verbunden werden kann. Hierzu wird auf die vorstehenden Erläuterungen der korrespondierenden Merkmale des Flurförderzeugs verwiesen.

In einer Ausgestaltung weist der Umrüstsatz ein Betätigungselement zur Befestigung an einer Deichsel des Flurförderzeugs auf, wobei das Betätigungselement dazu ausgebildet ist, die hydraulische Verbindungseinrichtung so anzusteuern, dass die Arbeitsvolumina mit dem Druckspeicher verbunden werden. Insbesondere kann es sich um einen Taster oder Schalter handeln, der ein Magnetventil ansteuert. An der Deichsel des umzurüstenden Flurförderzeugs bereits vorhandene Betätigungselemente brauchen bei der Nachrüstung mit dem Betätigungselement zur Bedienung des Rampenhubs nicht angetastet zu werden. Da bereits viele Deichseln mit Heben/Senken-Tasterwippen rechts und links ausgerüstet sind, kann die Umstellung in diesem Fall über ein Software-Update erfolgen, bei dem den vorhandenen Tasterwippen neue Funktionen zugewiesen werden.

In einer Ausgestaltung weisen die Hydraulikzylinder einen zulässigen Betriebsdruck von 200 bar oder mehr auf. Hierzu wird auf die vorstehenden Erläuterungen des korrespondierenden Merkmals des Flurförderzeugs verwiesen.

Nachfolgend wird die Erfindung anhand eines in Figuren dargestellten Ausführungsbeispiels näher erläutert. Es zeigen:
- Fig. 1:: ein erfindungsgemäßes Flurförderzeug in einer schematischen Ansicht von der Seite in vollständig abgesenkter Stellung,
- Fig. 2:: das Flurförderzeug aus Fig. 1 in einer weiteren schematischen Ansicht von der Seite im Initialhub,
- Fig. 3:: das Flurförderzeug aus Fig. 1 in einer weiteren schematischen Darstellung von der Seite im Rampenhub,
- Fig. 4:: einen Auszug aus einem Hydraulikschaltplan des Flurförderzeugs aus Fig. 1,
- Fig. 5:: einen vorderen Abschnitt eines Radarms in einer perspektivischen Ansicht schräg von unten.

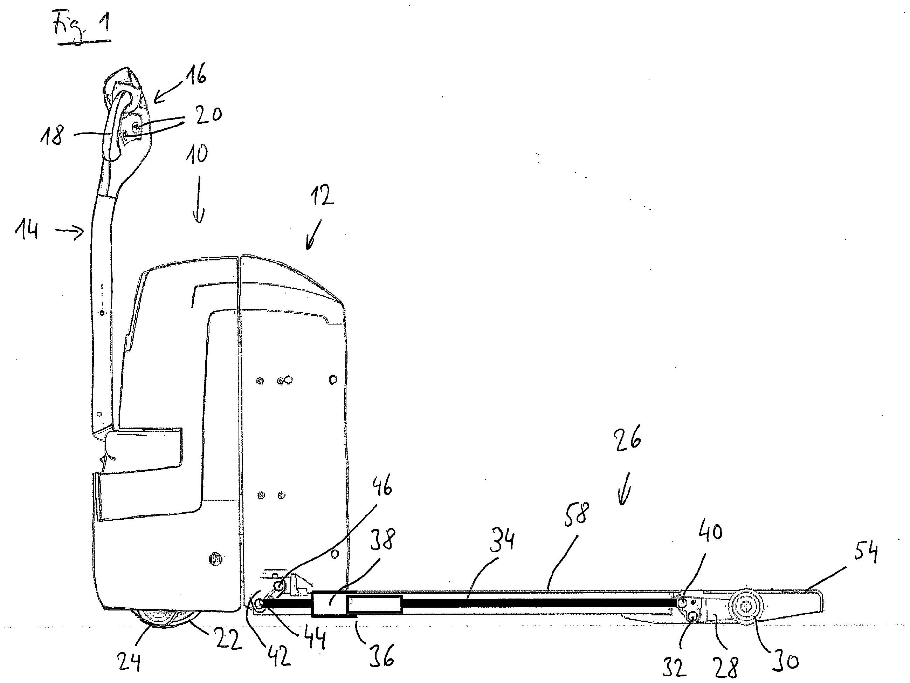

Bei dem in den Figuren 1 bis 3 in Gänze dargestellten Flurförderzeug handelt es sich um einen deichselgeführten Niederhubwagen mit einem Antriebsteil 10, einem Lastteil 12 und einer Deichsel 14. Die Deichsel 14 hat einen Deichselkopf 16 mit Handgriffen 18 und mehreren Betätigungselementen 20. Die Betätigungselemente 20 dienen der Steuerung des Hubantriebs. Eines der beiden Betätigungselemente 20 dient zur Bedienung einer Rampenhubfunktion, die nachfolgend näher erläutert wird. Die Betätigungselemente 20 (je eins rechts und links) sind Wippen, deren Betätigung auf einer Seite ein Heben, auf der anderen Seite ein Senken bewirkt.

Das Antriebsteil 10 weist ein lenkbares Antriebsrad 22 und ein ebenfalls lenkbares, nicht angetriebenes Rad 24 auf.

Im Lastteil 12 ist ein nicht dargestellter Hubzylinder angeordnet, mit dem das Lastteil 12 relativ zu dem Antriebsteil 10 angehoben werden kann. Das Lastteil 12 weist außerdem zwei parallel angeordnete Radarme 26 auf, von denen in den Figuren 1 bis 3 nur der dem Betrachter zugewandte Radarm 26 sichtbar ist. Die Radarme 26 sind fest mit dem Lastteil 12 verbunden und können gemeinsam mit diesem angehoben werden. Die Radarme weisen eine Radarmspitze 54 und einen Radarmkörper 58 auf.

In jedem Radarm 26 ist ein Radarmhebel 28, an dessen freiem Ende eine Lastrolle 30 gelagert ist, schwenkbar angelenkt. Hierzu ist der Radarmhebel 28 um eine Achse 32 schwenkbar an dem Radarm 26 befestigt.

Innerhalb jedes Radarms 26 befindet sich eine Druckstange 34, in die ein Hydraulikzylinder 36 mit einem Arbeitsvolumen 38 integriert ist. Das vordere, der Radarmspitze 54 zugewandte Ende der Druckstange 34 ist bei 40 gelenkig mit dem Radarmhebel 28 verbunden. Das andere Ende der Druckstange 34 ist bei 44 mit einem nur ausschnittsweise sichtbaren Umlenkhebel 42 gelenkig verbunden. Ein zweiter Punkt des Umlenkhebels 42 ist schwenkbar um eine Achse 46 am Lastteil 12 befestigt. Ein weiterer Punkt des Umlenkhebels 42, der in den Figuren nicht dargestellt ist, ist schwenkbar am Antriebsteil 10 angelenkt, sodass der Umlenkhebel 42 beim Anheben des Lastteils 12 relativ zu dem Antriebsteil 10 um die Achse 46 herum verschwenkt wird und die Druckstange 34 in Richtung zu der Spitze des Radarms 26 hin verlagert wird.

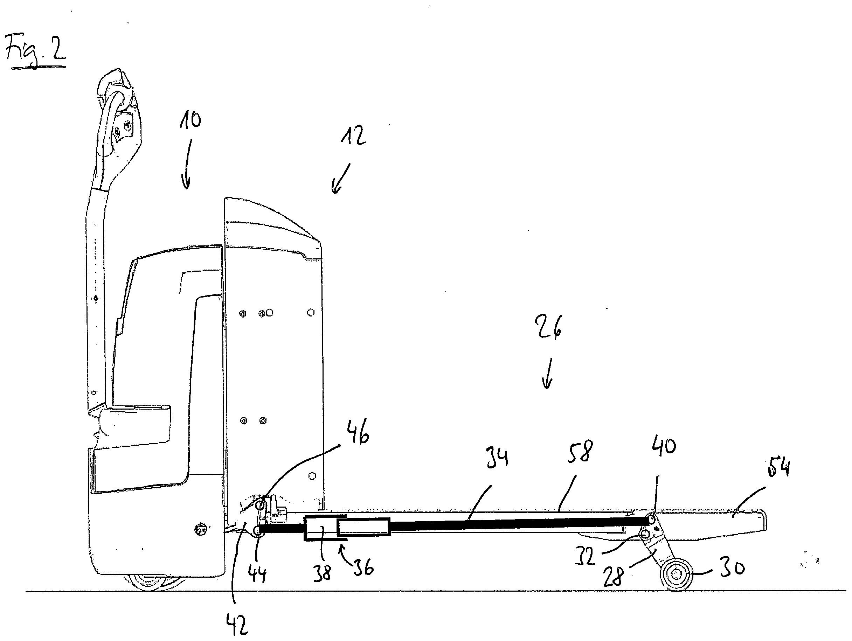

Bei vollständig angehobenem Lastteil 12 ergibt sich die in der Figur 2 dargestellte Anordnung. Man erkennt, dass der Umlenkhebel 42 verglichen zu seiner Stellung in Fig. 1 verschwenkt wurde und die Druckstange 34 insgesamt weiter zur Spitze des Radarms 26 hin angeordnet ist. Der Hydraulikzylinder 36 ist dabei in seiner auch in der Figur 1 gezeigten, vollständig ausgefahrenen Stellung verblieben und die in dem Arbeitsvolumen 38 befindliche Hydraulikflüssigkeit ist in dem Arbeitsvolumen 38 eingesperrt, sodass die Druckstange 34 große Druckkräfte übertragen kann.

Wie in der Figur 2 rechts erkennbar, führt dies zu einem Ausschwenken des Radarmhebels 28 um die Achse 32, sodass die Radarmspitze 54 des Radarms 26 angehoben wird. Figur 2 zeigt das Flurförderzeug bei vollständig ausgeführtem Initialhub. In dieser Stellung, ebenso wie in jeder beim Ausführen der Initialhubbewegung durchfahrenen Zwischenstellung zwischen den Figuren 1 und 2 sind die Radarme 26 horizontal angeordnet.

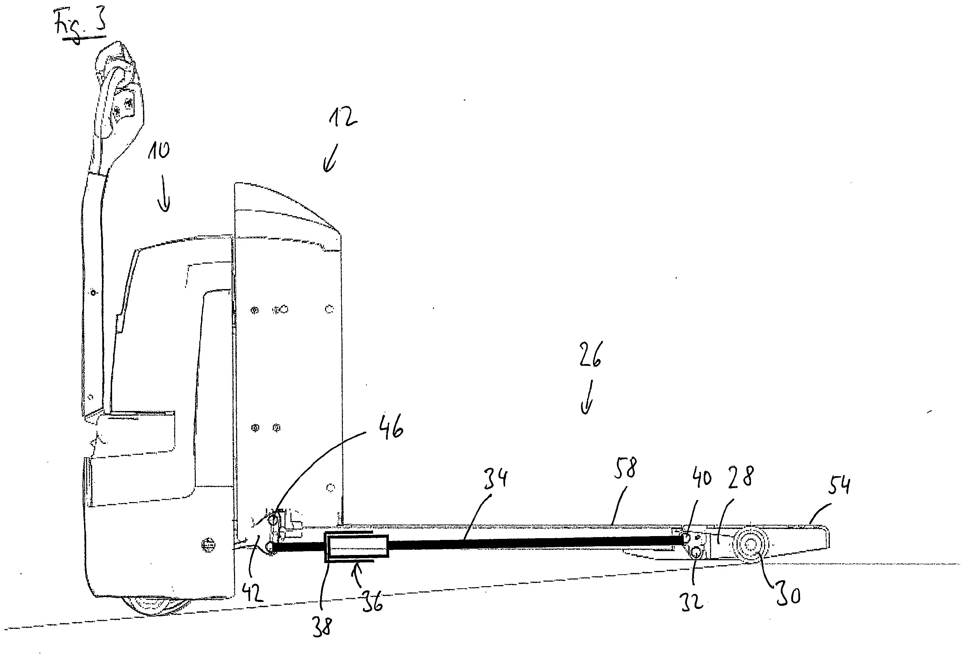

In der Figur 3 befindet sich das Flurförderzeug hingegen im Rampenhub. In dieser Stellung ist das Lastteil 12 weiterhin relativ zu dem Antriebsteil 10 vollständig angehoben, entsprechend der Stellung in der Figur 2. Der Hydraulikzylinder 36 der Druckstange 34 befindet sich allerdings nunmehr in einer vollständig eingefahrenen Position, sodass sich die Druckstange 34 stark verkürzt hat und das Arbeitsvolumen 38 minimal ist. Dadurch befindet sich der Radarmhebel 28 trotz vollständig angehobenem Lastteil 12 und weiterhin dementsprechend verschwenkten Umlenkhebel 42 in einer vollständig eingeschwenkten Stellung und die Radarmspitze 54 bleibt abgesenkt. Wie die Figur 3 veranschaulicht, ist dieser Rampenhub insbesondere zum Befahren einer Rampe hilfreich, weil die Radarme 26 in einer horizontalen Stellung angeordnet sind.

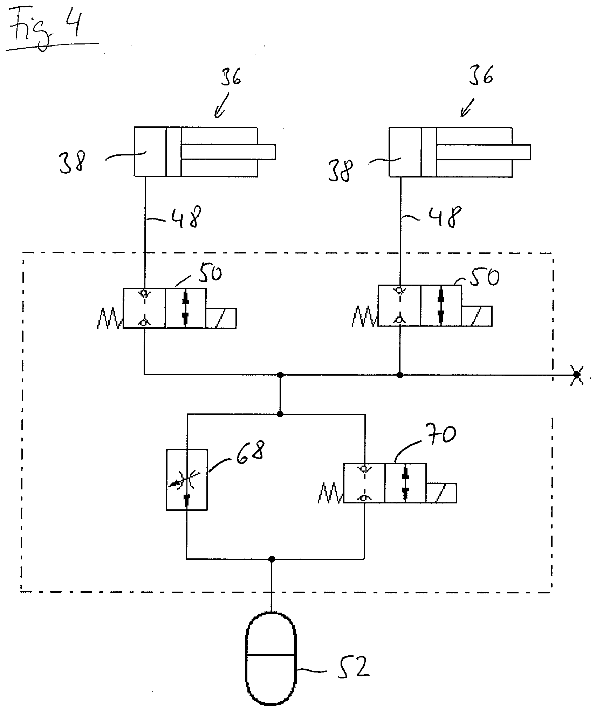

Figur 4 zeigt das zum Verstellen der Druckstangen 34 dienende, passive Hydrauliksystem. Man erkennt die beiden in die Druckstangen 34 integrierten Hydraulikzylinder 36 mit ihren Arbeitsvolumina 38. Die Figur 4 zeigt eine teilweise ausgefahrene Stellung. Jedes Arbeitsvolumen 38 ist über eine Hydraulikleitung 48, in der ein Steuerventil 50 angeordnet ist, und über eine Ventilanordnung, die aus einem Stromregelventil 68 und einem dazu parallel geschalteten Beipassventil 70, mit einem Druckspeicher 52 verbunden. Das Stromregelventil 68 kann in bestimmten Situationen ein schlagartiges Absenken der Gabelspitzen verhindern. In der Figur 4 befinden sich die beiden Steuerventile 50, die als Lasthalteventile ausgebildet sind, in einer gesperrten Stellung. Die in den Arbeitsvolumina 38 der beiden Hydraulikzylinder 36 befindliche Hydraulikflüssigkeit ist dadurch abgesperrt. Auch ein Austausch zwischen den beiden Arbeitsvolumina 38 ist unterbunden. Werden die beiden Steuerventile 50 in ihre Offenstellung verlagert, insbesondere durch Betätigen eines elektrischen Betätigungselements 20 am Deichselkopf 16 des Flurförderzeugs, werden die Arbeitsvolumina 38 mit dem Druckspeicher 52 verbunden. In diesem Fall können die Hydraulikzylinder 36 abhängig von den Betriebsbedingungen weiter ausgefahren werden, wobei Hydraulikflüssigkeit aus dem Druckspeicher 52 in die Arbeitsvolumina 38 einströmt, oder weiter eingefahren werden, wobei dann die Hydraulikflüssigkeit aus den Arbeitsvolumina 38 in den Druckspeicher 52 strömt.

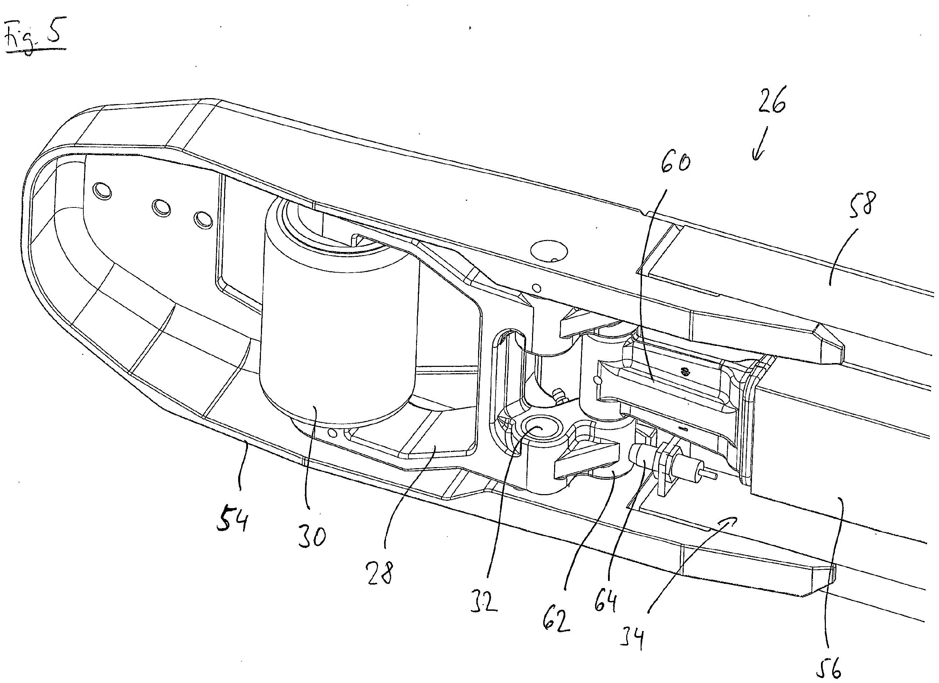

Figur 5 zeigt in einer perspektivischen Ansicht einen Blick schräg von unten unter einen vorderen Teil eines Radarms 26. Man erkennt die Lastrolle 30 am freien Ende des Radarmhebels 28 und dessen schwenkbare Lagerung um die Achse 32 innerhalb einer Ausnehmung der Radarmspitze 54, die von einem Gussteil gebildet ist.

Die Druckstange 34 ist innerhalb des von einem U-Profil gebildeten Radarmkörpers 58 angeordnet und besteht über einen Großteil ihrer Länge aus einem Kastenprofil 56. An ihrem vorderen Ende weist die Druckstange 34 eine ebenfalls aus einem Gussteil gefertigte Druckstangenspitze 60 auf, durch die eine nicht dargestellte Schwenkachse hindurchgeführt und an das von der Lastrolle 30 entfernte Ende des Radarmhebels 28 angelenkt ist.

Ein Sensor 64 ist am vorderen Ende des Radarmkörpers 58 angeordnet und erfasst die in der Figur 5 gezeigte, vollständig eingeschwenkte Stellung des Radarmhebels 28 durch die resultierende Annäherung des hinteren Endes 62 des Radarmhebels 28, durch das die Verbindungsachse zwischen Radarmhebel 28 und Druckstangenspitze 60 hindurchgeführt ist. Ein von dem Sensor 64 erzeugtes Signal kann über eine elektrische Leitung zu einer Steuerung des Flurförderzeugs weitergeleitet werden.

## Patentansprüche

1. Flurförderzeug mit Rampenhubfunktion und einem Antriebsteil (10) und einem relativ zu dem Antriebsteil (10) höhenverstellbaren Lastteil (12) mit zwei Radarmen (26), wobei jeder der Radarme (26) folgendes aufweist:
• einen Radarmhebel (28), der mindestens eine Lastrolle (30) aufweist und schwenkbar an dem Radarm (26) angelenkt ist, und
• eine Stange, über die eine Höhenverstellbewegung des Lastteils (12) mit einer Schwenkbewegung des Radarmhebels (28) gekoppelt ist, wobei das vordere Ende der Stange gelenkig mit dem Radarmhebel (28) verbunden ist und das andere Ende der Stange gelenkig mit einem Umlenkhebel (42) verbunden ist, wobei die Stange einen Hydraulikzylinder (36) aufweist, mit dem eine Länge der Stange verstellbar ist und der ein Arbeitsvolumen (38) aufweist, wobei
• die beiden Stangen Druckstangen (34) sind und
• das Flurförderzeug einen Druckspeicher (52) aufweist, der mit den Arbeitsvolumina (38) der beiden Hydraulikzylinder (36) verbindbar ist.

2. Flurförderzeug nach Anspruch 1, **dadurch gekennzeichnet, dass** das Flurförderzeug ein von dem Druckspeicher (52) und den Hydraulikzylindern (36) der Druckstangen (34) hydraulisch vollständig getrenntes Hydrauliksystem mit einem Hubzylinder und einer Hydraulikpumpe aufweist.

3. Flurförderzeug nach Anspruch 1 oder 2, **dadurch gekennzeichnet, dass** jedem der beiden Arbeitsvolumina (38) ein Steuerventil (50) zugeordnet ist, mit dem das jeweilige Arbeitsvolumen (38) wahlweise abgesperrt oder mit dem Druckspeicher (52) verbunden werden kann.

4. Flurförderzeug nach Anspruch 3, **dadurch gekennzeichnet, dass** zwischen den beiden Steuerventilen (50) einerseits und dem Druckspeicher (52) andererseits ein Stromregelventil (68) und ein parallel dazu geschaltetes Beipassventil (70) geschaltet sind, so dass die Verbindung zwischen den beiden Arbeitsvolumina (38) und dem Druckspeicher (52) wahlweise über das Stromregelventil (68) oder über das Beipassventil (70) hergestellt werden kann.

5. Flurförderzeug nach Anspruch 4, **gekennzeichnet durch** einen Sensor, der dazu ausgebildet ist, das Erreichen einer mittleren Hubhöhe anzuzeigen, und eine elektronische Steuerung, die dazu ausgebildet ist, beim Absenken des Lastteils (12) relativ zu dem Antriebsteil (10) bei geschlossenem Beipassventil (70) die beiden Steuerventile (50) bei Unterschreiten der mittleren Hubhöhe zu öffnen.

6. Flurförderzeug nach einem der Ansprüche 1 bis 5, **dadurch gekennzeichnet, dass** an einer Deichsel (14) des Flurförderzeugs ein Betätigungselement (20) angeordnet ist, dessen Betätigung den Druckspeicher (52) mit den Arbeitsvolumina (38) verbindet.

7. Flurförderzeug nach einem der Ansprüche 1 bis 6, **dadurch gekennzeichnet, dass** an einem der Radarme (26) ein Sensor (64) vorhanden ist, der eine vollständig eingeschwenkte Stellung des zugehörigen Radarmhebels (28) erfasst.

8. Flurförderzeug nach einem der Ansprüche 1 bis 6, **dadurch gekennzeichnet, dass** das Flurförderzeug einen Hubzylinder, einen Senkendsensor, der eine vollständig abgesenkte Stellung des Hubzylinders erfasst, einen Hubendsensor, der eine vollständig angehobene Stellung des Hubzylinders erfasst, und einen Betriebszustandsspeicher aufweist, der dazu ausgebildet ist, zu speichern, ob das Flurförderzeug zuletzt einen Rampenhub oder einen Initialhub ausgeführt hat.

9. Flurförderzeug nach einem der Ansprüche 1 bis 8, **gekennzeichnet durch** einen nichtflüchtigen Speicher, in dem eine Information über einen Betriebszustand des Flurförderzeugs nach dem Ausschalten des Flurförderzeugs erhalten bleibt.

10. Flurförderzeug nach einem der Ansprüche 1 bis 9, **dadurch gekennzeichnet, dass** die Hydraulikzylinder (36) einen zulässigen Betriebsdruck von 200 bar oder mehr aufweisen.

11. Umrüstsatz für ein Flurförderzeug, das ein Antriebsteil (10) und ein relativ zu dem Antriebsteil (10) höhenverstellbares Lastteil (12) mit zwei Radarmen (26) aufweist, wobei jeder der Radarme (26) einen Radarmhebel (28), der mindestens eine Lastrolle (30) aufweist und schwenkbar an dem Radarm (26) angelenkt ist, und eine Druckstange (34) aufweist, über die eine Höhenverstellbewegung des Lastteils (12) mit einer Schwenkbewegung des Radarmhebels (28) gekoppelt ist, wobei der Umrüstsatz zur Schaffung einer Rampenhubfunktion folgendes aufweist:
• zwei Druckstangen (34), die jeweils einen Hydraulikzylinder (36) aufweisen, mit dem eine Länge der Druckstange (34) verstellbar ist und der ein Arbeitsvolumen (38) aufweist, wobei das vordere Ende der Druckstange gelenkig mit dem Radarmhebel (28) verbindbar ist und das andere Ende der Druckstange gelenkig mit einem Umlenkhebel (42) verbindbar ist,
• einen Druckspeicher (52) und
• eine hydraulische Verbindungseinrichtung, mit der die Arbeitsvolumina (38) der beiden Hydraulikzylinder (36) mit dem Druckspeicher (52) verbindbar sind.

12. Umrüstsatz nach Anspruch 11, **dadurch gekennzeichnet, dass** die hydraulische Verbindungseinrichtung zwei Steuerventile (50) aufweist, mit denen jeweils eines der Arbeitsvolumina (38) wahlweise abgesperrt oder mit dem Druckspeicher (52) verbunden werden kann.

13. Umrüstsatz nach Anspruch 11 oder 12, **dadurch gekennzeichnet, dass** der Umrüstsatz ein Betätigungselement (20) zur Befestigung an einer Deichsel (14) des Flurförderzeugs aufweist, wobei das Betätigungselement (20) dazu ausgebildet ist, die hydraulische Verbindungseinrichtung so anzusteuern, dass die Arbeitsvolumina (38) mit dem Druckspeicher (52) verbunden werden.

14. Umrüstsatz nach einem der Ansprüche 11 bis 13, **dadurch gekennzeichnet, dass** der Umrüstsatz einen Sensor (64) zur Befestigung an einem der Radarme (26) aufweist, wobei der Sensor (64) dazu ausgebildet ist, eine vollständig eingeschwenkte Stellung des zugehörigen Radarmhebels (28) zu erfassen.

15. Umrüstsatz nach einem der Ansprüche 11 bis 14, **dadurch gekennzeichnet, dass** die Hydraulikzylinder (36) einen zulässigen Betriebsdruck von 200 bar oder mehr aufweisen.

## Claims

1. An industrial truck with ramp lift function and a drive part (10) and a load part (12) with two wheel arms (26) that is height-adjustable relative to the drive part (10), wherein each of the wheel arms (26) has the following:
• a wheel arm lever (28), which has at least one load roller (30) and is pivotably articulated on the wheel arm (26) and
• a rod, via which a height adjusting movement of the load part (12) is coupled with a pivoting movement of the wheel arm lever (28), wherein the front end of the rod is connected in an articulated manner to the wheel arm lever (28) and the other end of the rod is connected in an articulated manner to a deflection lever (42), wherein the rod has a hydraulic cylinder (36), with which a length of the rod is adjustable and which has an operating volume (38), wherein
• the two rods are push rods (34) and
• the industrial truck has a pressure accumulator (52), which is connectable with the operating volumes (38) of the two hydraulic cylinders (36).

2. The industrial truck according to claim 1, **characterized in that** the industrial truck has a hydraulic system with a lift cylinder and a hydraulic pump, the hydraulic system being completely separated hydraulically from the pressure accumulator (52) and the hydraulic cylinders (36) of the push rods (34).

3. The industrial truck according to claim 1 or 2, **characterized in that** a control valve (50) is assigned to each of the two operating volumes (38), with which the respective operating volume (38) can be optionally blocked or connected with the pressure accumulator (52).

4. The industrial truck according to claim 3, **characterized in that** a flow-control valve (68) and a bypass valve (70) connected in parallel to the flow-control valve (68) are connected between the two control valves (50) on the one hand and the pressure accumulator (52) on the other hand, such that the connection between the two operating volumes (38) and the pressure accumulator (52) can be made selectively via the flow-control valve (69) or via the bypass valve (70).

5. The industrial truck according to claim 4, **characterized by** a sensor adapted to indicate when a medium lift height is reached, and by an electronic control adapted to open the two control valves (50) when an actual lift height falls below the medium lift height during lowering the load part (12) relative to the drive part (10) while the bypass valve (70) is closed.

6. The industrial truck according to one of claims 1 to 5, **characterized in that** an actuating element (20) is arranged on a drawbar (14) of the industrial truck, the actuation of which connects the pressure accumulator (52) with the operating volume (38).

7. The industrial truck according to one of claims 1 to 6, **characterized in that** a sensor (64) is present on one of the wheel arms (26), which captures a completely swung-in position of the associated wheel arm lever (28).

8. The industrial truck according to one of claims 1 to 6, **characterized in that** the industrial truck has a lift cylinder, a lower end sensor, which captures a completely lowered position of the lift cylinder, a lift end sensor, which captures a completely raised position of the lift cylinder, and an electronic controller with an operating state memory, which is designed to save whether the industrial truck last executed a ramp lift or an initial lift.

9. The industrial truck according to one of claims 1 to 8, **characterized by** a non-volative memory in which information on an operating state of the industrial truck is maintained after the industrial truck has been switched off.

10. The industrial truck according to one of claims 1 to 9, **characterized in that** the hydraulic cylinders (36) have a permissible operating pressure of 200 bar or more.

11. A retrofit kit for an industrial truck, which has a drive part (10) and a load part (12) with two wheel arms (26) that is height-adjustable relative to the drive part (10), wherein each of the wheel arms (26) has a wheel arm lever (28), which has at least one load roller (30) and is pivotably articulated on the wheel arm (26), and a push rod (34), via which a height adjusting movement of the load part (12) is coupled with a pivoting movement of the wheel arm lever (28), wherein the retrofit kit for establishing a ramp lift function has the following:
• two push rods (34), each of which has a hydraulic cylinder (36), with which a length of the push rod (34) is adjustable and which has an operating volume (38), wherein the front end of the rod is connectable in an articulated manner to the wheel arm lever (28) and the other end of the rod is connectable in an articulated manner to a deflection lever (42),
• a pressure accumulator (52) and
• a hydraulic connecting device, with which the operating volumes (38) of the two hydraulic cylinders (36) are connectable with the pressure accumulator (52).

12. The retrofit kit according to claim 11, **characterized in that** the hydraulic connecting device has two control valves (50), with which respectively one of the operating volumes (38) can be optionally blocked or connected with the pressure accumulator (52).

13. The retrofit kit according to claim 11 or 12, **characterized in that** the retrofit kit has an actuating element (20) for fastening on a drawbar (14) of the industrial truck, wherein the actuating element (20) is designed to activate the hydraulic connecting device such that the operating volumes (38) are connected with the pressure accumulator (52).

14. The retrofit kit according to one of claims 11 to 13, **characterized in that** the retrofit kit has a sensor (64) for fastening on one of the wheel arms (26), wherein the sensor (64) is designed to detect a completely swung-in position of the associated wheel arm lever (28).

15. The retrofit kit according to one of claims 11 to 14, **characterized in that** the hydraulic cylinders (36) have a permissible operating pressure of 200 bar or more.

## Revendications

1. Chariot de manutention doté d'une fonction de levage de rampe et d'une partie d'entraînement (10) et d'une partie de charge (12) réglable en hauteur par rapport à la partie d'entraînement (10), avec deux bras de roue (26), dans lequel chacun des bras de roue (26) comprend :
• un levier de bras de roue (28) présentant au moins une poulie de charge (30), tout en étant articulé de façon pivotante sur le bras de charge (26), et
• une tige par le biais de laquelle un mouvement de réglage en hauteur de la partie de charge (12) est couplé à un mouvement de pivotement du levier de bras de roue (28), l'extrémité avant de la tige étant reliée de façon articulée au levier de bras de roue (28) et l'autre extrémité de la tige étant reliée de façon articulée à un levier de renvoi (42),
dans lequel la tige présente un vérin hydraulique (36) permettant de régler une longueur de la tige et présentant un volume de travail (38), où
• les deux tiges sont des tiges de pression (34), et
• le chariot de manutention présente un réservoir de pression (52) apte à être relié aux volumes de travail (38) des deux vérins hydrauliques (36).

2. Chariot de manutention selon la revendication 1, **caractérisé en ce que** le chariot de manutention présente un système hydraulique entièrement indépendant hydrauliquement du réservoir de pression (52) et des vérins hydrauliques (36) des tiges de pression (34), avec un vérin de levage et une pompe hydraulique.

3. Chariot de manutention selon la revendication 1 ou 2, **caractérisé en ce qu'**une soupape de commande (50) est attribuée à chacun des deux volumes de travail (38), avec lequel le volume de travail (38) respectif peut être sélectivement verrouillé ou relié au réservoir de pression (52).

4. Chariot de manutention selon la revendication 3, **caractérisé en ce qu'**une soupape de régulation de débit (68) et une soupape de dérivation (70) montée parallèlement à celle-ci sont montées entre les deux soupapes de commande (50) d'une part et le réservoir de pression (52) d'autre part, de telle façon que la jonction entre les deux volumes de travail (38) et le réservoir de pression (52) peut être réalisée sélectivement par le biais de la soupape de régulation de débit (68) ou par le biais de la soupape de dérivation (70).

5. Chariot de manutention selon la revendication 4, **caractérisé par** un capteur conçu pour indiquer l'atteinte d'une hauteur de levage moyenne, et par une commande électronique conçue pour ouvrir les deux soupapes de commande (50) si la hauteur de levage moyenne n'est pas atteinte pendant l'abaissement de la partie de charge (12) par rapport à la partie d'entraînement (10) avec la soupape de dérivation (70) fermée.

6. Chariot de manutention selon l'une des revendications 1 à 5, **caractérisé en ce qu'**un élément d'actionnement (20) dont l'actionnement relie le réservoir de pression (52) aux volumes de travail (38) est disposé sur un timon (14) du chariot de manutention.

7. Chariot de manutention selon l'une des revendications 1 à 6, **caractérisé en ce qu'**un capteur (64) détectant une position du levier de bras de roue (28) correspondant entièrement pivotée vers l'intérieur est prévu sur l'un des bras de roue (26).

8. Chariot de manutention selon l'une des revendications 1 à 6, **caractérisé en ce que** le chariot de manutention présente un vérin de levage, un capteur d'abaissement détectant une position entièrement abaissée du vérin de levage, un capteur de levage détectant une position entièrement relevée du vérin de levage, et une mémoire d'état de fonctionnement conçu pour enregistrer si le chariot de manutention a effectué dernièrement un levage de rampe ou un levage initial.

9. Chariot de manutention selon l'une des revendications 1 à 8, **caractérisé par** une mémoire non volatile, dans laquelle est conservée une information concernant l'état de fonctionnement du chariot de manutention après l'arrêt du chariot de manutention.

10. Chariot de manutention selon l'une des revendications 1 à 9, **caractérisé en ce que** les vérins hydrauliques (36) présentent une pression de fonctionnement admissible de 200 bars ou plus.

11. Kit de conversion pour un chariot de manutention présentant une partie d'entraînement (10) et une partie de charge (12) réglable en hauteur par rapport à la partie d'entraînement (10), avec deux bras de roue (26), dans lequel chacun des bras de roue (26) comprend un levier de bras de roue (28) présentant au moins une poulie de charge (30), tout en étant articulé de façon pivotante sur le bras de charge (26), et une tige de pression (34) par le biais de laquelle un mouvement de réglage en hauteur de la partie de charge (12) est couplé à un mouvement de pivotement du levier de bras de roue (28), le kit de conversion présentant les éléments suivants, pour la réalisation d'une fonction de levage de rampe :
• deux tiges de pression (34) présentant respectivement un vérin hydraulique (36) permettant de régler la longueur de la tige de pression (34) et présentant un volume de travail (38),
où l'extrémité avant de la tige de pression peut être reliée de façon articulée au levier de bras de roue (28) et l'autre extrémité de la tige de pression peut être reliée de façon articulée à un levier de renvoi (42),
• un réservoir de pression (52) et
• un dispositif de jonction hydraulique permettant de relier les volumes de travail (38) des deux vérins hydrauliques (36) au réservoir de pression (52).

12. Kit de conversion selon la revendication 11, **caractérisé en ce que** le dispositif de jonction hydraulique présente deux soupapes de commande (50) permettant de verrouiller sélectivement l'un des volumes de travail (38) ou de relier celui-ci au réservoir de pression (52).

13. Kit de conversion selon la revendication 11 ou 12, **caractérisé en ce que** le kit de conversion présente un élément d'actionnement (20) destiné à être fixé sur un timon (14) du chariot de manutention, dans lequel l'élément d'actionnement (20) est conçu pour commander le dispositif de jonction hydraulique de manière à relier les volumes de travail (38) au réservoir de pression (52).

14. Kit de conversion selon l'une des revendications 11 à 13, **caractérisé en ce que** le kit de conversion présente un capteur (64) destiné à être fixé sur l'un des bras de roue (26), dans lequel le capteur (64) est conçu pour détecter une position du levier de bras de roue (28) correspondant entièrement pivotée vers l'intérieur.

15. Kit de conversion selon l'une des revendications 11 à 14, **caractérisé en ce que** les vérins hydrauliques (36) présentent une pression de fonctionnement admissible de 200 bars ou plus.
